# DEMANDE DE BREVET EUROPEEN

(11) **EP 3 960 544 A1**
(43) Date de publication de la demande: **02.03.2022**
(21) Numéro de dépôt: 21184344.6
(22) Date de dépôt: 07.07.2021
(51) Int. Cl.: B60R 13/08, B62D 35/02, B60K 15/063, B60K 15/067

(54) **VÉHICULE DOTÉ D'UN CARÉNAGE SOUS LE RÉSERVOIR À CARBURANT**

(30) Priorité: 14.08.2020 FR 2008494
(71) Demandeur: Renault s.a.s, 92100 Boulogne Billancourt (FR)
(72) Inventeur: LE-FEVRE, Olivier, 91620 LA VILLE DU BOIS (FR)
(74) Mandataire: Renault Group

(57) **Abrégé**

L'invention se rapporte à un véhicule (1, 100) possédant un réservoir (2, 102) à carburant délimité par une paroi (3, 4, 5, 103, 104, 105), et un carénage (8, 108) solidarisé audit réservoir (2, 102) par des moyens de fixation (11, 12, 111, 112). Selon l'invention, au moins l'un desdits moyens de fixation (111, 112) est extérieur à la paroi (103, 104, 105) délimitant le réservoir (102).

## Description

La présente invention concerne un véhicule doté d'un carénage sous le réservoir à carburant.

Certains véhicules sont dotés de réservoirs à carburant placés dans une zone inférieure de ces véhicules, de sorte que lesdits réservoirs émergent sous lesdits véhicules en regard la route. Afin d'améliorer l'aérodynamisme de ces véhicules et protéger ces réservoirs de toute projection en provenance de la route lorsque ces véhicules sont en phase de roulage, un carénage est fixé auxdits réservoirs. Ce carénage se retrouve ainsi interposé entre la route et le réservoir et constitue une peau de protection pour ledit réservoir.

Or, actuellement, un problème régulièrement rencontré lors de l'arrimage du carénage sur le réservoir est que les moyens de fixation de ce carénage audit réservoir obligent à créer des creux dans ledit réservoir, réduisant significativement le volume disponible de celui-ci. Autrement dit, la mise en œuvre de ce carénage sur le réservoir s'effectue au détriment de la capacité de ce réservoir.

Un véhicule selon l'invention possède un carénage solidarisé au réservoir, et dont les moyens de fixation sont configurés pour n'avoir aucune influence sur le volume disponible de ce réservoir.

L'invention a pour objet un véhicule possédant un réservoir à carburant délimité par une paroi, et un carénage solidarisé audit réservoir par des moyens de fixation.

Selon l'invention, au moins l'un desdits moyens de fixation est extérieur à la paroi délimitant le réservoir. De cette manière, ce moyen de fixation ne nécessite aucune modification structurelle du réservoir et permet ainsi à ce réservoir d'avoir une contenance maximale. Avantageusement, ce moyen de fixation est décalé du réservoir dans un plan horizontal, et ne vient plus se superposer audit réservoir suivant un axe vertical. Ce moyen de fixation peut par exemple comprendre une pièce d'extension du réservoir dotée d'un orifice dans lequel viendrait s'introduire une vis ou un rivet. Cette pièce d'extension peut venir de matière avec le réservoir, ou peut constituer une pièce rapportée qui vient se solidariser au réservoir, par exemple par collage. Ce moyen de fixation qui est extérieur à la paroi délimitant le réservoir est préférentiellement au contact de ladite paroi. Le carénage est préférentiellement une pièce plane de faible épaisseur, qui s'étend parallèlement à une face inférieure du réservoir. Lorsque le véhicule repose sur un sol horizontal, le carénage s'étend lui-même dans un plan horizontal. Le carénage recouvre, soit partiellement, soit totalement le réservoir à carburant.

Selon une caractéristique possible de l'invention, tous les moyens de fixation du carénage au réservoir sont extérieurs à la paroi délimitant ledit réservoir. De cette manière, aucun moyen de fixation du carénage au réservoir ne nécessite une modification structurelle du réservoir. Pour cette configuration le volume du réservoir est totalement préservé et est donc maximal.

Selon une caractéristique possible de l'invention, les moyens de fixation sont au contact de la paroi délimitant le réservoir. Cette configuration englobe à la fois la configuration pour laquelle ces moyens de fixation sont venus de matière avec le réservoir, et la configuration pour laquelle ces moyens de fixation sont constitués par des pièces rapportées qui sont fixées au réservoir.

Selon une caractéristique possible de l'invention, les moyens de fixation sont venus de matière avec le réservoir et constituent des extensions dudit réservoir. Pour cette configuration, le réservoir est préférentiellement moulé avec les extensions. Avantageusement, chaque extension présente un relief, pouvant par exemple être un orifice, un creux ou une bosse, et destiné à interagir avec un relief du carénage pour assurer une fixation par rivet, par vis ou par clip.

Selon une caractéristique possible de l'invention, les moyens de fixation sont des pièces rapportées qui sont arrimées au réservoir. Cet arrimage est avantageusement réalisé par collage.

Selon une caractéristique possible de l'invention, chaque moyen de fixation qui est extérieur à la paroi délimitant le réservoir comprend un fût présentant un orifice. Cet orifice est prévu pour recevoir un organe de fixation pouvant par exemple être un rivet ou une vis. Avantageusement, le fut est de forme cylindrique et l'orifice s'étend le long de l'axe de révolution dudit fût.

Selon une caractéristique possible de l'invention, chaque moyen de fixation qui est extérieur à la paroi délimitant le réservoir, comprend un élément de fixation à choisir parmi une vis et un rivet destiné à venir se loger dans l'orifice du fût. Il s'agit d'éléments de fixation qui sont parfaitement adaptés à la fixation d'un carénage sur un réservoir, mais qui ne sont nullement limitatifs dans le cadre d'un véhicule selon l'invention.

Selon une caractéristique possible de l'invention, les moyens de fixation sont répartis à la périphérie du carénage de sorte que le carénage ne déborde pas desdits moyens de fixation dans un plan horizontal. De cette manière, l'ensemble constitué par le réservoir et le carénage est compact, ne nécessitant aucun espace de dégagement important sous le véhicule.

Selon une caractéristique possible de l'invention, le carénage est souple et descend sous la garde au sol du véhicule. Cette configuration est rendue possible grâce aux moyens de fixation qui sont répartis autour du réservoir et qui ne s'étendent plus sous le réservoir suivant un axe vertical. Avantageusement, le carénage présente une pliure lui permettant de se déformer facilement dans le cas où un obstacle se présenterait sous le véhicule. Bien que placé sous la garde au sol su véhicule, ce carénage est amené à s'effacer facilement lors d'un choc avec ledit obstacle sous le véhicule.

Selon une caractéristique possible de l'invention, le réservoir et le carénage sont en matière plastique.

Un véhicule selon l'invention, présente l'avantage de posséder un carénage sous le réservoir à carburant sans avoir à réduire le volume dudit réservoir grâce à un emplacement judicieux des moyens de fixation dudit carénage sur ledit réservoir. Il a de plus l'avantage de présenter un ensemble composé par le réservoir et le carénage qui est compact, car ledit carénage est proche dudit réservoir et ne déborde pas latéralement de celui-ci.

On donne ci-après, une description détaillée d'un véhicule selon l'invention, en se référant aux figures suivantes :
[Fig. 1] représente une vue du dessous d'un véhicule selon l'état de la technique montrant un carénage fixé au réservoir à carburant,
[Fig. 2] représente une vue schématique de côté d'un véhicule selon l'état de la technique montrant un carénage fixé au réservoir à carburant,
[Fig. 3] représente une vue schématique de côté d'un véhicule selon l'invention montrant un carénage fixé au réservoir à carburant,
[Fig. 4] représente une vue en perspective de côté d'un carénage et d'un réservoir à carburant d'un véhicule selon l'invention,
[Fig. 5] représente une vue schématique de côté d'un deuxième mode de réalisation préféré d'un véhicule selon l'invention montrant un carénage fixé au réservoir à carburant.

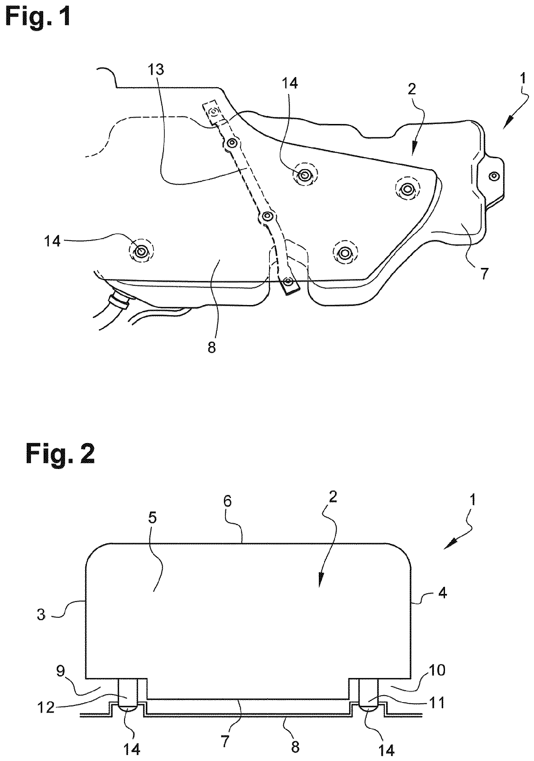

En se référant aux figures 1 et 2, un véhicule 1 de l'état de la technique comprend un réservoir 2 à carburant qui saille sous ledit véhicule. Ce réservoir 2 à carburant est délimité schématiquement par des parois latérales 3, 4, 5 qui s'étendent suivant des plans sensiblement verticaux, par une paroi supérieure 6 et par une paroi inférieure 7. La paroi supérieure 6 et la paroi inférieure 7 sont parallèles et s'étendent chacune dans un plan horizontal lorsque le véhicule 1 repose sur un sol horizontal. De cette manière, la paroi inférieure 7 correspond au fond du réservoir 2 et représente la partie la plus basse dudit réservoir 2.

Afin d'assurer un bon aérodynamisme du véhicule 1 et de protéger le réservoir 2 à carburant de toute projection lorsque le véhicule est en phase de roulage, un carénage 8 est fixé au réservoir 2. Ce carénage 8, qui est préférentiellement réalisé en matière plastique, est fixé au réservoir 2 de manière à s'interposer entre ledit réservoir 2 et la route. Ce carénage 8 est matérialisé par une pièce plane et de faible épaisseur, qui vient se placer sous la paroi inférieure 7 du réservoir 2 en étant parallèle à celle-ci. Le carénage 8 représente la pièce la plus basse du véhicule 1. Le positionnement vertical du carénage 8 dans la configuration initiale de fixation carénage, est contraint par l'obligation d'être au-dessus de ladite garde au sol dudit véhicule 1.

Comme l'illustre la figure 2, la fixation du carénage 8 au réservoir 2, nécessite de créer des évidements 9, 10 dans ledit réservoir 2 afin de pouvoir mettre en œuvre les moyens de fixation 11, 12 dudit carénage 8 audit réservoir 2. Ces moyens de fixation sont préférentiellement réalisés avec des fûts 11, 12 qui sont arrimés au réservoir 2, lesdits fûts 11, 12 s'étendant verticalement. De façon avantageuse, chaque fût 11, 12 est cylindrique, et possède un orifice prenant naissance à une extrémité inférieure dudit fût 11, 12 et s'étendant le long de leur axe de révolution. Le carénage 8 présente des ouvertures et est positionné sous le réservoir 2 de sorte qu'à chacune desdites ouvertures corresponde un orifice. Une vis 14 ou un rivet est inséré dans chaque ouverture et orifice qui se superposent pour arrimer le carénage 8 au réservoir 2. Puisque les moyens de fixation 11, 12 ne sont pas placés en périphérie du réservoir 2, le carénage 8 doit déborder latéralement de ces moyens de fixation 11, 12 pour couvrir l'intégralité du réservoir 2.

Sur l'exemple de la figure 1, le carénage 8 est fixé au réservoir 2 au moyen d'une bride 13 allongée, dont les deux extrémités considérées suivant un axe longitudinal de ladite bride 13 sont fixées à un élément de structure du véhicule et dont une zone centrale est fixée au réservoir au moyen de deux points de fixation.

Un inconvénient rencontré avec ce type d'agencement, est que pour chaque moyen de fixation 11, 12 mis en œuvre, il est nécessaire de créer un évidement 11, 12 dans le réservoir 2, diminuant de façon significative le volume disponible de ce réservoir 2. Autrement dit, la fixation du carénage 8 génère une diminution du volume disponible du réservoir 2.

Un véhicule 100 selon l'invention présente la particularité de posséder un carénage 108 qui est fixé au réservoir 102 à carburant sans diminuer le volume disponible dudit réservoir 102.

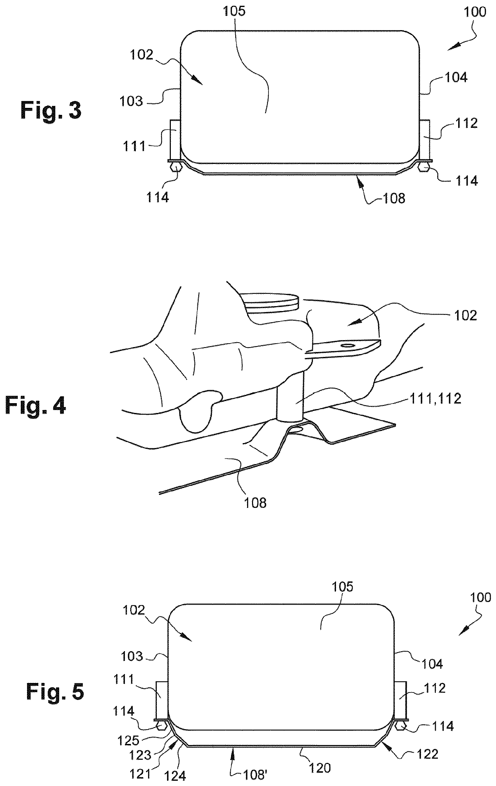

En se référant aux figures 3 et 4, pour empêcher une réduction du volume disponible du réservoir 102, les moyens de fixation 111, 112 du carénage 108 audit réservoir 102 sont déportés sur les côtés dudit réservoir 102, afin d'éviter à avoir à créer des évidements dans le réservoir 102, qui diminueraient son volume disponible. Ces moyens de fixations 111, 112 sont placés à l'extérieur du réservoir 102, contre les parois latérales 103, 104, 105 délimitant ledit réservoir 102. Chaque moyen de fixation 111, 112 est préférentiellement réalisé avec un fût 111, 112 qui est avantageusement solidarisé au réservoir 102 par collage, ledit fût 111, 112 s'étendant verticalement. De façon avantageuse, chaque fût 111, 112 est cylindrique, et possède un orifice prenant naissance à une extrémité inférieure dudit fût 111, 112 et s'étendant le long de leur axe de révolution. Le carénage 108 présente des ouvertures et est positionné sous le réservoir 102 de sorte qu'à chacune desdites ouvertures se superpose un orifice. Une vis 114 ou un rivet est inséré dans chaque ouverture et orifice qui se superposent pour arrimer le carénage 108 au réservoir 102.

En se référant à la figure 3, puisque les moyens de fixation 111, 112 sont situés en périphérie du réservoir 102 le carénage 108 n'a pas à déborder latéralement desdits moyens de fixation 111, 112 pour recouvrir intégralement ledit réservoir 102.

En se référant à la figure 5, cette nouvelle configuration de montage du carénage 108 sous le réservoir 102, permet de fixer un carénage souple 108' sous le réservoir 102. Ce carénage 108', qui descend sous la garde au sol du véhicule 100, présente une paroi principale plane 120 prolongée de chaque côté par deux parois latérales 121, 122 joignant chacune ladite paroi principale plane 120 à un moyen de fixation 111, 112 solidarisé au réservoir 102. Le carénage 108' est placé sous le réservoir 102 de sorte que :
- la paroi principale plane 120 s'étende dans un plan horizontal lorsque le véhicule repose sur un sol horizontal et représente la partie la plus basse du carénage 108 descendant sous la garde au sol du véhicule 100,
- chaque paroi latérale 121, 122 s'étend de façon oblique pour joindre la paroi principale plane 120 à un moyen de fixation 111, 112 solidarisé au réservoir 102, ladite paroi latérale 121, 122 s'élevant entre ladite paroi principale plane 120 et ledit moyen de fixation 121, 122.

Le carénage 108' est rendu souple en introduisant une pré-pliure 123 dans chaque paroi latérale 121, 122. Cette pré-pliure 123 permet de diviser chaque paroi latérale 121, 122 en deux segments plans 124, 125 qui sont en continuité l'un de l'autre et inclinés l'un par rapport à l'autre. De cette manière, si le carénage 108 ' devait rencontrer malencontreusement un obstacle sous le véhicule 100, il s'effacerait en se pliant facilement au niveau des pré-pliure 123.

## Revendications

1. Véhicule (1, 100) possédant un réservoir (2, 102) à carburant délimité par une paroi (3, 4, 5, 103, 104, 105), et un carénage (8, 108) solidarisé audit réservoir (2, 102) par des moyens de fixation (11, 12, 111, 112), **caractérisé en ce qu'**au moins l'un desdits moyens de fixation (111, 112) est extérieur à la paroi (103, 104, 105) délimitant le réservoir (102).

2. Véhicule selon la revendication 1, **caractérisé en ce que** tous les moyens de fixation (111, 112) du carénage (108) au réservoir (102) sont extérieurs à la paroi (103, 104, 105) délimitant ledit réservoir (102).

3. Véhicule selon la revendication 2, **caractérisé en ce que** les moyens de fixation (111, 112) sont au contact de la paroi (103, 104, 105) délimitant le réservoir (102).

4. Véhicule selon l'une quelconque des revendications 2 ou 3, **caractérisé en ce que** les moyens de fixation (111, 112) sont venus de matière avec le réservoir (102) et constituent des extensions dudit réservoir (102).

5. Véhicule selon l'une quelconque des revendications 2 ou 3, **caractérisé en ce que** les moyens de fixation (111, 112) sont des pièces rapportées qui sont arrimées au réservoir (102).

6. Véhicule selon l'une quelconque des revendications 2 à 5, **caractérisé en ce que** chaque moyen de fixation (111, 112) qui est extérieur à la paroi (103, 104, 105) délimitant le réservoir (102), comprend un fût présentant un orifice.

7. Véhicule selon la revendication 6, **caractérisé en ce que** chaque moyen de fixation (111, 112) qui est extérieur à la paroi (103, 104, 105) délimitant le réservoir (102), comprend un élément de fixation (114) à choisir parmi une vis et un rivet destiné à venir se loger dans l'orifice du fût.

8. Véhicule selon l'une quelconque des revendications 2 à 7, **caractérisé en ce que** les moyens de fixation (111, 112) sont répartis à la périphérie du carénage (108) de sorte que le carénage (108) ne déborde pas desdits moyens de fixation (111, 112) dans un plan horizontal.

9. Véhicule selon l'une quelconque des revendications 2 à 8, **caractérisé en ce que** le carénage (108') est souple et descend sous la garde au sol du véhicule (100).

10. Véhicule selon l'une quelconque des revendications 2 à 9, **caractérisé en ce que** le réservoir (102) et le carénage (108) sont en matière plastique.
